# EUROPEAN PATENT SPECIFICATION

(11) **EP 1 472 901 B1**
(45) Date of publication and mention of the grant of the patent: **28.07.2010**
(21) Application number: 03729262.0
(22) Date of filing: 07.01.2003
(51) Int. Cl.: H04W 48/18

(54) **SELECTING GGSN IN SHARED MOBILE NETWORK**
GGSN-AUSWAHL IN EINEM GEMEINSAM BENUTZTEN MOBILNETZWERK
SELECTION DE NOEUD DE TRANSIT (GGSN) DANS UN RESEAU MOBILE PARTAGE

(30) Priority: 08.01.2002 FI 20020026
(43) Date of publication of application: 03.11.2004
(73) Proprietor: Nokia Corporation, 02150 Espoo (FI)
(72) Inventor: HAUMONT, Serge, FIN-00320 Helsinki (FI)
(74) Representative: Äkräs, Tapio Juhani
(86) International application number: PCT/FI2003/000007
(87) International publication number: WO 2003/058996

(56) References cited:
- WO-A1-00/14981
- WO-A1-02/74002
- WO-A1-99/37103

## Description

### BACKGROUND OF THE INVENTION

The invention relates to packet switched portions of mobile networks, and particularly to the sharing of a Serving GPRS Support Node (SGSN) in a radio network shared by different network operators. The General Packet Radio Service (GPRS) was designed to alleviate the drawbacks of the GSM system (the Global System for Mobile Communications) and to allow packet switched applications to be used in a mobile network. GPRS networks are also used for third generation mobile networks.

Third generation mobile operators are interested in applying a shared network in such a way that two or more operators would use a common radio network and a common SGSN as well. This would allow costs related to network construction and maintenance, for example, to be reduced, and, in addition, a shared network may be used in various cases. For example, the two or more operators may decide to share the costs of the network. One possibility is that each one of the operators covers only a part of a country, or, in the case of two operators, a half of it. Another possibility is that the operators cover a certain area (e.g. a rural area) with a shared network belonging to all of them. This shared network is then an equivalent network to the home network of a Mobile Station (MS) belonging to one of the operators. The shared network will not have a subscriber register (HLR, Home Location Register) and may not have a Gateway GPRS Support Node (GGSN).Another example is an 'established operator who has a national roaming agreement with a 'greenfield operator', so that in a part of the country (e.g. a rural area), the greenfield operator uses the established operator's coverage. The established operator's network is thus equivalent to the home network of an MS (belonging to the greenfield operator).

WO-A-02/074002, published on 19 September, 2002, discloses a method and a device for determining which of the owners of a shared network a visiting mobile terminal is going to be connected to. The device derives information on the identity of the mobile terminal, and the derived information is then used to determine the network owner which the mobile terminal is going to be connected to. The derived information may include the IMSI (international mobile subscriber identity) of the mobile terminal, and the device compares it with a list in the SGSN (serving GPRS support node) of the shared radio network.

The operators of shared networks will be competing with each other by offering diverse subscriber connections and services, and therefore all the operators have preferably at least one GGSN of their own. A Mobile Virtual Network Operator (MVNO) may only have GGSNs and an HLR, and it gains access through other operators.

A problem in the above arrangement is that the SGSNs currently employ methods in which the GGSN of the network where a mobile station is located at a given moment is selected as its GGSN, which is thus not necessarily the GGSN of its home network. There is a method that can be used to alleviate the problem. It comprises using a flag in the HLR, i.e. a "VPLMN address allowed"-flag is set to 'No' to force the GGSN of the home network to always serve as the GGSN. The problem with this solution is that it directs the mobile station to use the GGSN of the home network also in those visiting networks that are not equivalent to the home network of the mobile station. For example, when roaming is concerned, it is not always desirable to use the home GGSN, because a closer GGSN (in the visited country) may offer the same services (i.e. APN, Access Point Name). Obviously, if the MS is located in its home country but served by an equivalent PLMN, the home GGSN is usually physically quite close.

### BRIEF DESCRIPTION OF THE INVENTION

It is therefore an object of the invention to provide a method and an apparatus implementing the method to enable the above problem to be solved. This is achieved by a method, system and network nodes, which are characterized by what is stated in the independent claims. The preferred embodiments of the invention are disclosed in the dependent claims.

The underlying idea of the invention is that information relating to predefined partner networks that are equivalent to the home network is maintained in mobile networks, the information being checked when a mobile station is to be connected to a GGSN.

In this context, the term 'home network' is used to refer to the actual home network of a mobile station, i.e. to the network of its home network operator. The term 'partner network' refers to a network having an agreement to provide access to the other network and/or to gain access through the other network. Examples of partner network operators are MVNOs or roaming partners. The term 'shared network' refers to networks providing access to more than one operator. In other words 'a shared network element' can be a property of a first network but a second network may use it. It can also be commonly owned by the first and the second network. The term 'equivalent network' is used for networks that are equivalent to the home network.

An advantage of the method and system of the invention is that on the basis of the partner information maintained in the system, the appropriate GGSN can be selected on the basis of the home PLMN of the MS and on the network where the MS is located.

In particular, a GGSN located in a network belonging to the home operator can be selected when appropriate (i.e. a GGSN managed by the home operator is located in the same or a near-by country). For example, a mobile station located in a predefined partner network equivalent to its home network can be connected to the GGSN of the home network. When the mobile station is outside the home network and predefined partner networks of the home network, it can be connected to a visited GGSN.

### BRIEF DESCRIPTION OF THE DRAWINGS

In the following, the invention will be described with reference to preferred embodiments and the accompanying drawings, in which

Figure 1 illustrates the architecture of a shared mobile network;

Figures 2, 3 and 4 illustrate the selection of the GGSN.

### DETAILED DESCRIPTION OF THE INVENTION

In the following, preferred embodiments of the invention will be described with reference to a third generation mobile communications system, such as the UMTS (Universal Mobile Communications System). This invention is not, however, meant to be restricted to these embodiments. Consequently, the invention may be applied in any mobile communications system that provides GPRS-type packet switched radio service capable of transmitting packet-switched data. Examples of other systems include the IMT-2000, IS-41, GSM, or the like, such as the PCS (Personal Communication System) or the DCS 1800 (Digital Cellular System for 1800 MHz). The specifications of mobile communications systems and particularly those of the IMT-2000 and the UMTS advance rapidly. This may require additional changes to the invention. For this reason, the terminology and the expressions used should be interpreted in their broadest sense since they meant to illustrate the invention and not to restrict it. The relevant inventive aspect is the functionality concerned, not the network element or equipment where it is executed.

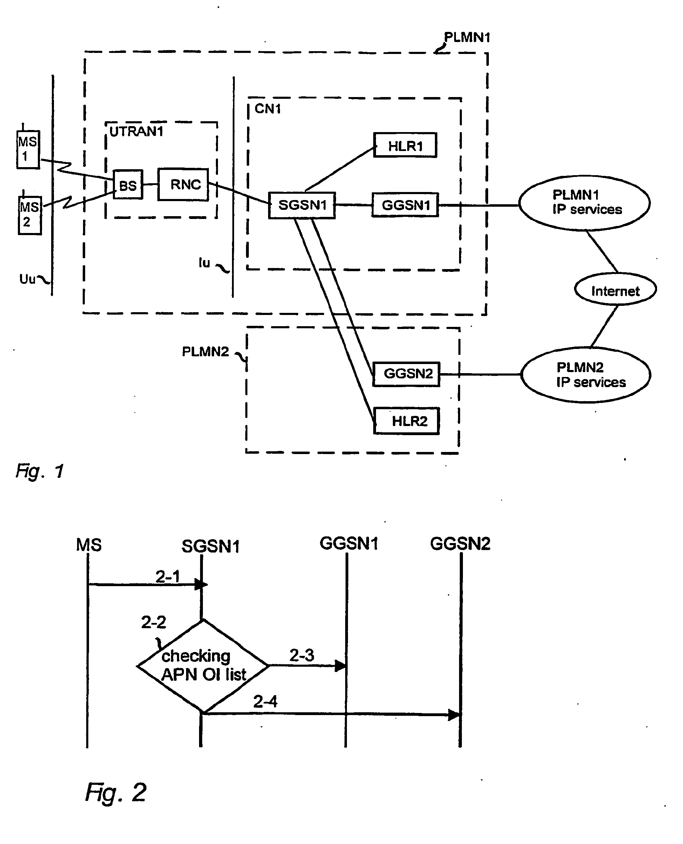

Figure 1 shows a simplified architecture of the packet switched portion of the UMTS in which only the elements essential for the invention are included. It is apparent to a person skilled in the art that a common mobile communications system also comprises other functions and structures that need not be described in greater detail in this context. The main components of the UMTS (Core Network CN1, Universal Terrestrial Radio Access Network UTRAN1) are well known and will not be described in detail herein. In the UMTS, the interface between the core network CN1 and the UTRAN1 is referred to as lu and the air interface (radio interface) between the UTRAN1 and the mobile station MS is referred to as Uu. PLMN1 and PLMN2 refer to two separate mobile networks, which belong to different operators and may be predefined partner networks equivalent to each other.

UTRAN is a conceptual term for a third generation radio network, and it identifies a network part between the lu- and Uu-interfaces, the network part comprising radio network controllers RNC and base stations BS (Node B).

A Radio Network Controller RNC is a network node that is responsible for controlling the radio resources of the UTRAN. Logically, it corresponds to a Base Station Controller (BSC) in the GSM. In Figure 1 the RNC is connected to a node of the core network CN1, i.e. to an SGSN1.

The core network CN1 may be connected to external networks, which may be either circuit switched, such as the PLMN, PSTN (Public Switched Telephone Network) and ISDN (Integrated Services Digital Network), or packet switched networks, such as the Internet and the X.25. The packet switched portion of the core network CN1 comprises a Home Location Register HLR1, SGSN1 and GGSN1. The core network described herein is based on the third generation UMTS network. Core networks of other kinds of systems, such as the IS-41, may comprise other network elements.

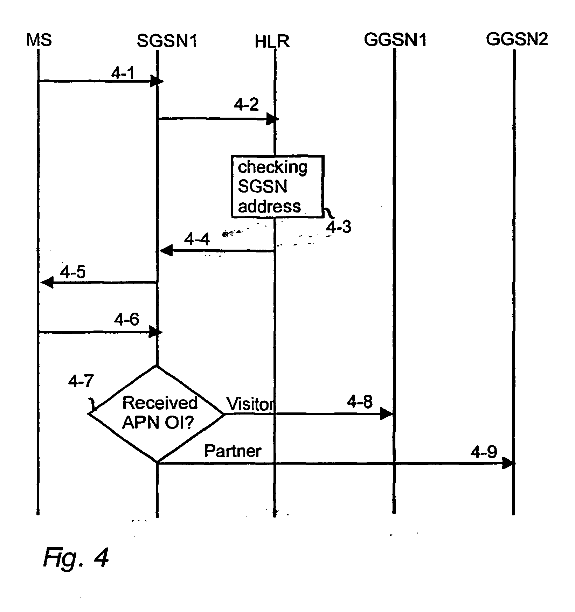

In the third generation mobile networks, the packet switched portion utilizes the GPRS system. The GRPS system, which employs a 3G-radio access (such as the UMTS) or a 2G-radio access (such as the GSM), comprises GPRS nodes, i.e. a Serving GPRS Node SGSN1 and a Gateway GPRS Node GGSN1. The primary functions of the SGSN include detecting GPRS-mobile stations MS within its service area, handling the registration processes of new mobile stations MS together with GPRS registers, sending data packets to and receiving them from the GPRS-mobile station MS and maintaining a register of the locations of the mobile stations MS within the service area. The operation of the SGSN according to the preferred embodiments of the invention is described below with reference to Figures 2 and 4.

The main functions of the GGSN comprise interaction with external data networks. The GGSN connects the GPRS network of the operator to external systems, such as the GPRS systems of other operators, data networks, such as the IP (Internet Protocol) network or the X.25 network, and to service switching centres. The GGSN comprises the PDP (Packet Data Protocol) addresses of GPRS mobile stations and their routing information, i.e. their SGSN addresses.

Within the area of one and the same network PLMN1, the serving network node SGSN1 and the gateway node GGSN1 are interconnected through an internal network of the operator, which may be implemented using the IP network, for example. The SGSN1 is connected to the GGSN2 preferably logically and/or physically, without using the GGSN1 in between.

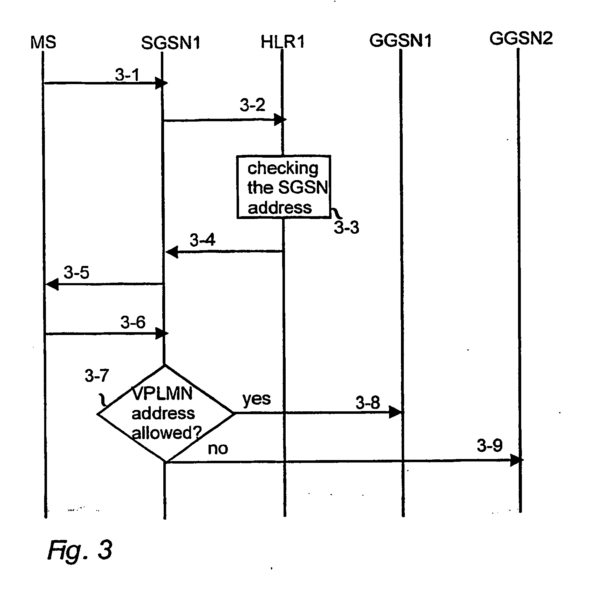

Subscriber data are stored in GPRS subscriber registers HLR1 and HLR2 for MS1 and MS2, respectively, and they include the correspondence between the mobile station identifier, such as an MS-ISDN or an IMSI (International Mobile Subscriber Identity), and the PDP address. Both networks comprise a subscriber register storing the data of those subscribers whose home network the network in question is. The operation of a subscriber register according to the preferred embodiments of the invention will be described in connection with Figures 3 and 4.

A practical feature for use in network sharing is equivalent PLMN (Public Land Mobile Network). It facilitates the network selection (part of the cell selection process) made by the MS by giving equal priority to a PLMN that is equivalent to the home PLMN. Other features to guide the network selection process are available, for example the preferred PLMN list on the SIM (Subscriber Identity Module) or USIM (UMTS Subscriber Identity Module).

According to the present invention, information relating to predefined partner networks is maintained in the HLR and/or the SGSN and is used for selecting the appropriate GGSN. Figure 1 depicts a first Mobile Station MS1 whose home network is the PLMN1, and a second Mobile Station MS2, which belongs to the PLMN2. The PLMN1 is a predefined partner network of the PLMN2, and they are typically in the same country. When MS2 is located within an area not covered by its home network PLMN2, it uses the PLMN1 to be connected. The MS1 is naturally using its home network PLMN1 to be connected. So both the MS1 and the MS2 are connected to the same SGSN1. The MS1 is connected through the SGSN1 to the GGSN1 and the MS2 is connected through the SGSN1 to the GGSN2. Therefore both the MS1 and the MS2 can access to their own PLMN IP services. If the home network of the MS is the PLMN2, it is connected to the GGSN of the home network, i.e. GGSN2, provided that the PLMN1 has agreed to connect PLMN2 mobile stations to their home network. The PLMN1 and the PLMN2 are partner networks for which the way to select the GGSN has been predefined (based on their agreement) within the information maintained in the subscriber register and/or the SGSN1. In addition to prior art means, a system or system network nodes that implement the functionality of the invention comprise means for processing information relating to the home network of the mobile station in a manner that will be described below. Existing network nodes and mobile stations comprise processors and memory that can be utilized in the operations of the invention. Any changes needed in implementing the invention may be carried out using supplements or updates of software routines and/or routines included in application specific integrated circuits (ASIC) and/or programmable circuits, such as EPLDs (Electrically Programmable Logic Device) or FPGAs (Field Programmable Gate Array).

Figure 2 shows signalling according to the first preferred embodiment of the invention. According to the embodiment, a local APN Operator Identifier (APNOI) is configured in the SGSN1 for each predefined partner operator sharing the network. This embodiment therefore requires changes only to the SGSN.

In the GPRS network, the APN refers to the GGSN used by the GPRS core network. The APN sent by an MS comprises a mandatory APN network identifier and an optional APN operator identifier. The APN subscribed in the HLR comprises only the APN network identifier. The APN network identifier determines the IP network that the user wishes to connect to. The APN operator identifier defines the core network of the operator providing the access. In current systems the SGSN has one local APN operator identifier for the local (i.e. visited) network. When the SGSN searches the local network for a GGSN, it adds the APN operator identifier in question to the APN network identifier sent by the MS or configured in the HLR. If the use of the local network is not allowed, or if no suitable local access is found, the SGSN searches the home network by adding the APN operator identifier of the home network (derived from IMSI) to the APN network identifier sent by the mobile station or configured in the HLR.

With reference to Figure 2, the mobile station MS sends in step 2-1 an Activate PDP Context Request to the SGSN1, which checks the subscriber data it has received (during the attach procedure) from the HLR. In step 2-2, the SGSN1 decides whether the request can be accepted and whether it should use a GGSN in the visited network. According to the present invention, if the MS belongs to a predefined partner operator (typically having a GGSN in the same country), the SGSN1 wishes to establish a connection with the local GGSN of the partner operator. Therefore the SGSN1 checks the IMSI of the MS from the MNC/MCC (Mobile Network Code/Mobile Country Code) fields to know the MS home operator. The SGSN1 then checks a preconfigured list to find out if a local APN operator identifier is to be used for this MNC/MCC. Therefore, the information relating to predefined partner networks maintained in the SGSN1 comprises a preconfigured list of MNC/MCC codes and the related local APN operator identifiers. These APN operator identifiers identify the network of the partner operator.

If the MNC/MCC and its corresponding local APN operator identifier are configured in said list, the SGSN1 adds the corresponding local APN operator identifier to the APN network identifier. Next, a DNS query is carried out. The GPRS system employs a Domain Name Server (DNS) when a connection is to be set up to find out a GGSN address in the SGSN. The DNS returns the GGSN address of a GGSN located within a network belonging to the operator defined by the APN operator identifier. If said local APN operator identifier corresponds to the home operator of the MS, the mobile station MS is connected to the GGSN of its own operator, which is the GGSN1 in step 2-3, provided that the home network of the mobile station is the PLMN1. Correspondingly, the mobile station MS is connected to the GGSN of its own operator in step 2-4, i.e. to the GGSN2, provided that the PLMN2 is the home network of the mobile station.

If the MNC/MCC is not configured in said list, the mobile station MS does not belong to a predefined partner operator (e.g. the MS is roaming from another country), and the SGSN1 in step 2-2 either uses one local APN operator identifier as a default value (normal procedure used today as only one APNOI is defined by SGSN this one is the default) or selects a random APN operator identifier among the codes configured in the SGSN1. In this first (normal) case the visited GGSN, the GGSN1, is selected as the GGSN in step 2-3. The second case (random selection) is particularly suited if the SGSN belongs to a shared network not having its own GGSN. The random selection is then performed among the GGSNs of the operators owning the shared network.

It should be noted that the previous embodiment may be used in a variety of cases. For example, the local GGSN selected may be located in a neighbouring country and not in the same country. A typical case would be an operator who owns a network in two countries and, for practical reasons, prefers to concentrate its GGSNs in one country. With the above mechanism providing the proper configuration of local APN operator identifier in the partner operator SGSN, this can be easily carried out. So the term 'local' should be understood broadly as the APN operator identifier to be used when a VPLMN is to be selected. Another example could be two global operators having partnership agreements in many countries. When an MS of operator 1 moves into another country and uses the predefined partner network of operator 2, it may still be connected to a GGSN managed by operator 1 but located inside said another country. In other words, the home operator can be understood as having GGSNs in many countries. This can be achieved with the present invention by having in the preconfigured list many MNC/MCC codes (all belonging to one global operator) mapped to the same local APN operator identifier corresponding to the local network of this global operator.

Figure 3 shows signalling according to a second preferred embodiment of the invention. According to the embodiment, SGSN addresses belonging to a mobile network PLMN2 that is a predefined partner network to the mobile network PLMN1 are configured in advance and information about them is maintained in the home location register HLR1. This embodiment therefore requires changes only to the HLR.

With reference to Figure 3, the mobile station MS sends in step 3-1 an Attach Request or Routing Area Update Request to the SGSN 1, and the SGSN1 sends an Update Location Request to the HLR in step 3-2. Upon reception of the Update Location Request at the HLR, the routine checks in step 3-3 whether the SGSN1 belongs to a preconfigured list comprising SGSN addresses (or only address prefixes) of predefined partner operators. If it belongs to said list, the HLR sets a "VPLMN address allowed"-flag to a value indicating 'No', and if it does not, the value of the flag indicates 'Yes'. This information is transmitted to the SGSN1 in step 3-4 with an Insert Subscriber Data message. When said flag is set to 'Yes' the MS sends a PDP Context Activation Request to the SGSN1 in step 3-6. Before that the SGSN1 informs in step 3-5 the MS that the Routing Area Update has been accepted. The GGSN is selected at the SGSN1 in step 3-7. When the "VPLMN address allowed"-flag has the value 'No' and the home network of the MS is the PLMN2, the GGSN selected at the SGSN1 is a GGSN located in the home network of the MS, i.e. GGSN2. The GGSN1 is the local GGSN of the PLMN1, and it is selected as the GGSN if the home network of the mobile station does not have an agreement with the PLMN1 and if the PLMN1 allows the use of the visited GGSN. When the home network of the mobile station is the PLMN1, the GGSN1 is selected as the GGSN, irrespective of the value of the "VPLMN address allowed"-flag.

According to a third preferred embodiment of the invention, a global operator operating in two or more countries, for example, may configure the HLR to maintain information about the SGSN addresses of its other networks, also referred to as "predefined partner networks belonging to the home network operator". Upon reception of the Update Location Request at the HLR, the routine checks in step 3-3 whether the SGSN1 belongs to a preconfigured list containing SGSN addresses (or only address prefixes) of predefined partner operators. If it belongs to said list, the HLR sets a "VPLMN address allowed"-flag to a value indicating 'Yes', and if it does not, the value of the flag indicates 'No'. When the "VPLMN address allowed"-flag has the value 'Yes', the GGSN selected at the SGSN1 is the GGSN1 of the current network, even if the mobile station were always to be connected to the home GGSN according to the default setting. This is typically suited for a case in which the same PLMN IP services can be accessed from the GGSN1 as from the home GGSN, as both belong to the same global operator.

According to a fourth preferred embodiment of the invention, an operator may configure the HLR to maintain information about the SGSN addresses and the APN operator identifier to be used by the MS when accessing the network from the SGSN in question.

With reference to Figure 4, upon reception of the Update Location Request at the HLR, the routine checks in step 4-3 whether the SGSN1 belongs to a preconfigured list comprising SGSN addresses (or only address prefixes) of predefined partner operators. If it belongs to said list, the HLR sends the corresponding APN operator identifier to the SGSN1 within an Insert Subscriber Data message in step 4-4. This requires a new optional information element to be added to this message, and so new functionality is needed in both the SGSN and the HLR. Otherwise steps 4-1 - 4-6 in Figure 4 correspond to steps 3-1 - 3-6 in Figure 3 as described above in connection with the second embodiment. The SGSN should then use the APN operator identifier when querying the DNS in step 4-7. This is particularly suited for giving maximum flexibility to the home operator to control the GGSN selection from the HLR settings. For example, the home operator may identify an APN in a neighbouring country.

In the second, third and fourth embodiments, the information relating to the predefined partner networks is maintained in the HLR and it comprises a preconfigured list of SGSN addresses and their related "VPLMN address allowed"-flag values or APN operator identifiers.

The first, second and fourth preferred embodiments represent alternative ways of achieving the same goal in a specific situation where, based on an agreement between the operators involved, the home GGSN of a particular MS can be selected if it is located in same country as the SGSN. However, the solution presented in the first embodiment can be used in a variety of cases not covered by the second embodiment (e.g. the local GGSN selected is not located in the home country of the MS).

In the third embodiment of the invention the method according to the second embodiment is used for a different purpose. The third embodiment can be applied in a mobile communications system individually, or simultaneously with the first and/or the second embodiment.

As it can be seen, the invention relates to selecting, on the basis of information maintained in the system, the appropriate GGSN, which depends on the network in which the MS is located (indicated explicitly in the second, third and fourth embodiments by the SGSN address, and implicitly in the first embodiment by the SGSN to which the configuration according to the present invention is set) and on the home-PLMN of the MS (indicated explicitly in the first embodiment by the MNC/MCC derived from the IMSI, and implicitly in second, third and fourth embodiments by the HLR to which the configuration according to the present invention is set. So, the partner information preferably comprises indications showing directly or indirectly the location network of the MS and the home network of the MS.

The use of the equivalent PLMN functionality is not mandated by this invention. It is only a practical way to get the MS to select the network of a partner operator, but the proposed embodiments are not dependent on the method used to select the network.

The signalling messages and steps shown in Figures 2, 3 and 4 are simplified and aim only at describing the idea of the invention. Other signalling messages may be sent and/or other functions carried out between the messages and/or the steps. The signalling messages serve only as examples and they may contain only some of the information mentioned above. The messages may also include other information, and the titles of the messages may deviate from those given above.

Although the invention is presented with reference to specific embodiments, it is also conceivable to apply the invention in any situation involving a GGSN selection.

It is apparent to a person skilled in the art that as technology advances the basic idea of the invention can be implemented in various ways. The invention and its embodiments are therefore not restricted to the above examples, but they may vary within the scope of the claims.

## Claims

1. A method for selecting a gateway network node for a mobile station (MS1, MS2) served by a serving network node (SGSN1), in a system where at least two network operators may share a radio network (UTRAN1) and the serving network node (SGSN1), the system comprising at least two gateway network nodes (GGSN1, GGSN2), the method comprising
maintaining partner information about predefined partner networks (PLMN1, PLMN2), the partner information indicating that said network operators share the serving network node (SGSN1); and
selecting a gateway network node (GGSN1, GGSN2) for the mobile station on the basis of the partner information,
**characterized in that** the selection step of the method comprises the steps of
checking on the basis of the partner information whether a mobile station (MS) is in the home network, in a predefined partner network of the home network, or in a network outside them; and
selecting the gateway network node (GGSN1) of the home network if the mobile station (MS) is in its home network;
selecting the gateway network node (GGSN2) of the home network if the mobile station (MS) is in a predefined partner network of the home-network; or
selecting the gateway network node (GGSN1) of a visited network if the mobile station (MS) is outside its home network or predefined partner mobile networks of its home network.

2. A method according to claim 1, **characterized in that** the partner information comprises direct or indirect indications of
the network in which the mobile station is located (MS1, MS2); and of
the home network of the mobile station (MS1, MS2).

3. A method according to claim 1 or 2, **characterized in that** the selection step of the method comprises the steps of
checking on the basis of the partner information whether the mobile station is in a network that is a predefined partner network of the one belonging to its home network operator; and
selecting the gateway network node (GGSN1) of a visited network if the mobile station (MS) is in a network that is a predefined partner network of the one belonging to its home network operator.

4. A mobile communications system comprising
at least one mobile station (MS1, MS2);
a subscriber register (HLR1, HLR2) for maintaining subscriber information of the mobile station (MS1, MS2);
at least two networks (PLMN1, PLMN2) to which the mobile station (MS1, MS2) may connect when it is within the area of the network, one of the networks being the home network of the mobile station, the networks comprising at least one gateway network node (GGSN1, GGSN2) for interaction between packet switched mobile networks and external data networks; and
at least one serving network node (SGSN1) for serving the mobile station (MS1, MS2) while the mobile station is in the area of the serving network node,
wherein the system is configured to
maintain partner information about networks that are predefined partner networks of the home network, the home network sharing at least one serving gateway node (SGSN1) with each of the predefined partner networks; and to
select the gateway network node (GGSN1, GGSN2) by utilizing the partner information,
**characterized in that** the system is further configured to
check on the basis of the partner information whether a mobile station (MS) is in the home network, in a predefined partner network of the home network, or in a network outside them;
select the gateway network node (GGSN1) of the home network if the mobile station (MS) is in its home network;
select the gateway network node (GGSN2) of the home network if the mobile station (MS) is in a predefined partner network of the home network; and
select the gateway network node (GGSN1) of a visited network if the mobile station (MS) is outside its home network or predefined partner mobile networks of its home network.

5. A system according to claim 4, **characterized in that** the partner information is maintained in the serving network node (SGSN1) to indicate the networks sharing the serving network node (SGSN1).

6. A system according to claim 5, **characterized in that** the serving network node (SGSN1) is configured to compare the MNC/MCC code of the mobile station (MS), in connection with the context activation of the mobile station, with APN operator identifiers stored for each network operator sharing the SGSN1, said MNC/MCC code indicating explicitly the home network of the mobile station and said APN operator identifier indicating implicitly the partner information.

7. A system according to any one of claims 4, 5 or 6, **characterized in that** the serving network node (SGSN1) is also configured to connect a mobile station (MS) located in a mobile network that is a predefined partner network of its home network to the gateway network node (GGSN2) of the home network.

8. A system according to claim 4, **characterized in that** the partner information is maintained in a subscriber register (HLR1, HLR2).

9. A system according to claim 8, **characterized in that** the subscriber register (HLR) is configured to
check the partner information in connection with the location update of the mobile station (MS);
set the value of a "Visitor-PLMN address allowed"-flag to 'No' if the mobile station (MS) is in a predefined partner network of the home network; and
indicate the value of the flag to the serving network node (SGSN1).

10. A system according to any one of claims 4, 8 or 9, **characterized in that** the serving network node (SGSN1) is also configured to connect the mobile station (MS) located in a predefined partner network of its home network to the gateway network node (GGSN2) of the home network.

11. A system according to claim 4 or 8, **characterized in that** the subscriber register (HLR) is configured to
check the partner information in connection with the location update of the mobile station (MS), the partner information comprising at least one network belonging to the home network operator;
set value of the "Visitor-PLMN address allowed"-flag to 'Yes' if the mobile station (MS) is located in a network that is a predefined partner network of the one belonging to its home network operator; and
indicate the value of the flag to the serving network node (SGSN1).

12. A system according to any one of claims 4, 8 or 11, **characterized in that** the serving network node (SGSN1) is also configured to connect the mobile station (MS) located in a predefined partner network of the one belonging to its home network operator to the gateway network node (GGSN1) of the visited network on the basis of the partner information, the partner information comprising at least one network belonging to the home network operator.

13. A system according to claim 8, **characterized in that** the subscriber register (HLR1, HLR2) is configured to
compare the MNC/MCC code of the mobile station with APN operator identifiers stored for each network operator sharing the network in connection with the location update of the mobile station (MS); and
indicate the result of the comparison to the serving network node (SGSN1).

14. A subscriber register (HLR1, HLR2) for maintaining subscriber information in a system comprising
at least one mobile station,
at least two networks to which the mobile station may connect when it is within the area of the network, one of the networks being the home network of the mobile station, the networks comprising at least one gateway network node for interaction between packet switched mobile networks and external data networks; and
at least one serving network node for serving the mobile station while the mobile station is in the area of the serving network node,
the subscriber register (HLR1, HLR2) comprising
a first routine for maintaining partner information about networks that are predefined partner networks of the network, the partner network and the home network sharing at least one serving gateway node;
a second routine for checking the partner information of the mobile station; and
a third routine for indicating, on the basis of the partner information, the gateway network node, to which the mobile station is to be connected, to the serving network node serving the mobile station,
**characterized in that** the subscriber register (HLR1, HLR2) is arranged to
check on the basis of the partner information whether a mobile station (MS) is in the home network, in a predefined partner network of the home network, or in a network outside them;
indicate the gateway network node (GGSN1) of the home network if the mobile station (MS) is in its home network;
indicate the gateway network node (GGSN2) of the home network if the mobile station (MS) is in a predefined partner network of the home network; and
indicate the gateway network node (GGSN1) of a visited network if the mobile station (MS) is outside its home network or predefined partner mobile networks of its home network.

15. A serving network node (SGSN1) for relaying packet switched data in a system comprising
at least one mobile station;
a subscriber register for maintaining subscriber information of the mobile station; and
at least two networks to which the mobile station may connect when it is within the area of the network, one of the networks being the home network of the mobile station, the networks comprising at least one gateway network node for interaction between packet switched mobile networks and external data networks,
wherein the serving network node (SGSN1) comprises
a first routine for checking partner information about networks that are predefined partner networks of the network, the partner network and the home network sharing the serving gateway node; and
a second routine for selecting a gateway network node on the basis of the partner information,
**characterized in that** the serving network node (SGSN1) is arranged to
check on the basis of the partner information whether a mobile station (MS) is in the home network, in a predefined partner network of the home network, or in a network outside them;
select the gateway network node (GGSN1) of the home network if the mobile station (MS) is in its home network;
select the gateway network node (GGSN2) of the home network if the mobile station (MS) is in a predefined partner network of the home network; and
select the gateway network node (GGSN1) of a visited network if the mobile station (MS) is outside its home network or predefined partner mobile networks of its home network.

16. A network node according to claim **15, characterized in that** it further comprises a third routine for maintaining partner information.

17. A network node according to claims 15 or 16, **characterized in that** it is the SGSN of a GPRS network.

## Patentansprüche

1. Verfahren zum Auswählen eines Gateway Netzknotens für eine von einem Versorgungsnetzknoten (SGSN1) versorgte Mobilstation (MS1, MS2) in einem System, in dem mindestens zwei Netzwerkbetreiber ein Funknetz (UTRAN1) und den Versorgungsnetzknoten (SGSN1) gemeinsam benutzen können, und das System mindestens zwei Gateway Netzknoten (GGSN1, GGSN2) aufweist, wobei das Verfahren umfasst:
Pflegen der Partnerinformation betreffend vordefinierte Partnernetze (PLMN1, PLMN2), wobei die Partnerinformation anzeigt, dass die Netzwerkbetreiber den Versorgungsnetzknoten (SGSN1) gemeinsam benutzen; und
Auswählen eines Gateway Netzknotens (GGSN1, GGSN2) für die Mobilstation auf Basis der Partnerinformation,
**dadurch gekennzeichnet, dass** der Auswahlschritt des Verfahrens folgende Schritte umfasst:
Prüfen auf Basis der Partnerinformation, ob sich eine Mobilstation (MS) im Heimatnetz, in einem vordefinierten Partnernetz des Heimatnetzes oder in einem außerhalb derselben liegenden Netzwerk befindet; und
Auswählen des Gateway Netzknotens (GGSN1) des Heimatnetzes, wenn sich die Mobilstation (MS) in ihrem Heimatnetz befindet;
Auswählen des Gateway Netzknotens (GGSN2) des Heimatnetzes, wenn sich die Mobilstation (MS) in einem vordefinierten Partnernetz des Heimatnetzes befindet; oder
Auswählen des Gateway Netzknotens (GGSN1) eines besuchten Netzes, wenn sich die Mobilstation (MS) außerhalb ihres Heimatnetzes oder außerhalb der vordefinierten mobilen Partnernetze ihres Heimatnetzes befindet.

2. Verfahren nach Anspruch 1, **dadurch gekennzeichnet, dass** die Partnerinformation direkte oder indirekte Anzeigen
des Netzwerks, in dem sich die Mobilstation (MS1, MS2) befindet; und
des Heimatnetzes der Mobilstation (MS1, MS2) umfasst.

3. Verfahren nach Anspruch 1 oder 2, **dadurch gekennzeichnet, dass** der Auswahlschritt des Verfahrens folgende Schritte umfasst:
Prüfen auf Basis der Partnerinformation, ob sich die Mobilstation in einem Netzwerk befindet, welches ein vordefiniertes Partnernetz des Netzwerks ist, das ihrem Heimatnetzbetreiber gehört; und
Auswählen des Gateway Netzknotens (GGSN1) eines besuchten Netzwerks, wenn sich die Mobilstation (MS) in einem Netzwerk befindet, welches ein vordefiniertes Partnernetz des Netzwerks ist, das ihrem Heimatnetzbetreiber gehört.

4. Mobiles Kommunikationssystem, umfassend:
mindestens eine Mobilstation (MS1, MS2);
ein Teilnehmerregister (HLR1, HLR2) zum Pflegen der Teilnehmerinformation der Mobilstation (MS1, MS2);
mindestens zwei Netzwerke (PLMN1, PLMN2), an die sich die Mobilstation (MS1, MS2) anschließen kann, wenn sie sich innerhalb des Bereichs des Netzwerks befindet, wobei eins der Netzwerke das Heimatnetz der Mobilstation ist, wobei die Netzwerke mindestens einen Gateway Netzknoten (GGSN1, GGSN2) zur Interaktion zwischen den paketvermittelten mobilen Netzwerken und den externen Datennetzen umfassen; und
mindestens einen Versorgungsnetzknoten (SGSN1) zum Versorgen der Mobilstation (MS1, MS2), während sich die Mobilstation im Bereich des Versorgungsnetzknotens befindet,
wobei das System konfiguriert ist,
die Partnerinformation betreffend die Netzwerke zu pflegen, die vordefinierte Partnernetze des Heimatnetzes sind, wobei das Heimatnetz mindestens einen Versorgungsnetzknoten (SGSN1) gemeinsam mit jedem der vordefinierten Partnernetze benutzt; und
den Versorgungsnetzknoten (GGSN1, GGSN2) unter Nutzung der Partnerinformation auszuwählen,
**dadurch gekennzeichnet, dass** das System ferner konfiguriert ist,
auf Basis der Partnerinformation zu prüfen, ob sich eine Mobilstation (MS) im Heimatnetz, in einem vordefinierten Partnernetz des Heimatnetzes oder in einem außerhalb derselben liegenden Netzwerk befindet;
den Gateway Netzknoten (GGSN1) des Heimatnetzes auszuwählen, wenn sich die Mobilstation (MS) im Heimatnetz befindet;
den Gateway Netzknoten (GGSN2) des Heimatnetzes auszuwählen, wenn sich die Mobilstation (MS) in einem vordefinierten Partnernetz des Heimatnetzes befindet; und
den Gateway Netzknoten (GGSN1) eines besuchten Netzes auszuwählen, wenn sich die Mobilstation (MS) außerhalb ihres Heimatnetzes oder außerhalb der vordefinierten mobilen Partnernetze ihres Heimatnetzes befindet.

5. System nach Anspruch 4, **dadurch gekennzeichnet, dass** die Partnerinformation im Versorgungsnetzknoten (SGSN1) gepflegt wird, um die Netzwerke anzuzeigen, die den Versorgungsnetzknoten (SGSN1) gemeinsam benutzen.

6. System nach Anspruch 5, **dadurch gekennzeichnet, dass** der Versorgungsnetzknoten (SGSN1) konfiguriert ist, den MNC/MCC Code der Mobilstation (MS) in Verbindung mit der Kontextaktivierung der Mobilstation mit den für jeden den SGSN1 mitbenutzenden Netzwerkbetreiber gespeicherten APN Betreiberkennungen zu vergleichen, wobei der MNC/MCC Code explizit das Heimatnetz der Mobilstation anzeigt und die APN Betreiberkennung implizit die Partnerinformation anzeigt.

7. System nach einem der Ansprüche 4, 5 oder 6, **dadurch gekennzeichnet, dass** der Versorgungsnetzknoten (SGSN1) außerdem konfiguriert ist, eine Mobilstation (MS) in einem mobilen Netzwerk, das ein vordefiniertes Partnernetz ihres Heimatnetzes ist, an den Gateway Netzknoten (GGSN2) des Heimatnetzes anzuschließen.

8. System nach Anspruch 4, **dadurch gekennzeichnet, dass** die Partnerinformation in einem Teilnehmerregister (HLR1, HLR2) gepflegt wird.

9. System nach Anspruch 8, **dadurch gekennzeichnet, dass** das Teilnehmerregister (HLR) konfiguriert ist,
die Partnerinformation in Verbindung mit der Standortaktualisierung der Mobilstation (MS) zu prüfen;
den Wert eines "Besucher-PLMN Adresse erlaubt" Flags auf 'Nein' zu setzen, wenn sich die Mobilstation (MS) in einem vordefinierten Partnernetz des Heimatnetzes befindet; und
den Wert des Flags dem Versorgungsnetzknoten (SGSN1) anzuzeigen.

10. System nach einem der Ansprüche 4, 8 oder 9, **dadurch gekennzeichnet, dass** der Versorgungsnetzknoten (SGSN1) außerdem konfiguriert ist, die in einem vordefinierten Partnernetz ihres Heimatnetzes befindliche Mobilstation (MS) an den Gateway Netzknoten (GGSN2) des Heimatnetzes anzuschließen.

11. System nach Anspruch 4 oder 8, **dadurch gekennzeichnet, dass** das Teilnehmerregister (HLR) konfiguriert ist,
die Partnerinformation in Verbindung mit der Standortaktualisierung der Mobilstation (MS) zu prüfen, wobei die Partnerinformation mindestens ein dem Heimatnetzbetreiber gehörendes Netzwerk umfasst;
den Wert des "Besucher-PLMN Adresse erlaubt" Flags auf 'Ja' zu setzen, wenn sich die Mobilstation (MS) in einem Netzwerk befindet, welches ein vordefiniertes Partnernetz des ihrem Heimatnetzbetreiber gehörenden Netzwerks ist; und
den Wert des Flags dem Versorgungsnetzknoten (SGSN1) anzuzeigen.

12. System nach einem der Ansprüche 4, 8 oder 11, **dadurch gekennzeichnet, dass** der Versorgungsnetzknoten (SGSN1) außerdem konfiguriert ist, die in einem vordefinierten Partnernetz des ihrem Heimatnetzbetreiber gehörenden Netzwerks befindliche Mobilstation (MS) an den Gateway Netzknoten (GGSN1) des besuchten Netzwerks auf Basis der Partnerinformation anzuschließen, wobei die Partnerinformation mindestens ein Netzwerk umfasst, das dem Heimatnetzbetreiber gehört.

13. System nach Anspruch 8, **dadurch gekennzeichnet, dass** das Teilnehmerregister (HLR1, HLR2) konfiguriert ist,
den MNC/MCC Code der Mobilstation (MS) mit APN Betreiberkennungen zu vergleichen, die für jeden das Netzwerk mitbenutzenden Netzwerkbetreiber in Verbindung mit der Standortaktualisierung der Mobilstation (MS) gespeichert sind; und
das Ergebnis des Vergleichs dem Versorgungsnetzknoten (SGSN1) anzuzeigen.

14. Teilnehmerregister (HLR1, HLR2) zum Pflegen der Teilnehmerinformation in einem System umfassend:
mindestens eine Mobilstation,
mindestens zwei Netzwerke, an die sich die Mobilstation anschließen kann, wenn sie sich innerhalb des Bereichs des Netzwerks befindet, wobei eins der Netzwerke das Heimatnetz der Mobilstation ist, wobei die Netzwerke mindestens einen Gateway Netzknoten zur Interaktion zwischen paketvermittelten mobilen Netzwerken und externen Datennetzen umfassen; und
mindestens einen Versorgungsnetzknoten zum Versorgen der Mobilstation, während sich die Mobilstation im Bereich des Versorgungsnetzknotens befindet,
das Teilnehmerregister (HLR1, HLR2), umfassend:
eine erste Routine zum Pflegen der Partnerinformation betreffend Netzwerke, die vordefinierte Partnernetze des Netzwerks sind, wobei das Partnernetz und das Heimatnetz mindestens einen Versorgungsnetzknoten gemeinsam benutzen;
eine zweite Routine zum Prüfen der Partnerinformation der Mobilstation; und
eine dritte Routine, um auf Basis der Partnerinformation dem Versorgungsnetzknoten, der die Mobilstation versorgt, den Gateway Netzknoten anzuzeigen, an den die Mobilstation angeschlossen werden soll,
**dadurch gekennzeichnet, dass** das Teilnehmerregister (HLR1, HLR2) arrangiert ist,
auf Basis der Partnerinformation zu prüfen, ob sich eine Mobilstation (MS) im Heimatnetz, in einem vordefinierten Partnernetz des Heimatnetzes oder in einem außerhalb derselben liegenden Netzwerk befindet;
den Gateway Netzknoten (GGSN1) des Heimatnetzes anzuzeigen, wenn sich die Mobilstation (MS) in ihrem Heimatnetz befindet;
den Gateway Netzknoten (GGSN2) des Heimatnetzes anzuzeigen, wenn sich die Mobilstation (MS) in einem vordefinierten Partnernetz des Heimatnetzes befindet; und
den Gateway Netzknoten (GGSN1) eines besuchten Netzwerks anzuzeigen, wenn sich die Mobilstation (MS) außerhalb ihres Heimatnetzes oder außerhalb der vordefinierten mobilen Partnernetze ihres Heimatnetzes befindet.

15. Versorgungsnetzknoten (SGSN1) zur Weitergabe von paketvermittelten Daten in einem System, umfassend:
mindestens eine Mobilstation;
ein Teilnehmerregister zum Pflegen der Teilnehmerinformation der Mobilstation; und mindestens zwei Netzwerke, an die sich die Mobilstation anschließen kann, wenn sie sich innerhalb des Bereichs des Netzwerks befindet, wobei eines der Netzwerke das Heimatnetz der Mobilstation ist, und die Netzwerke mindestens einen Gateway Netzknoten zur Interaktion zwischen den paketvermittelten mobilen Netzwerke und externen Datennetzen aufweisen,
wobei der Versorgungsnetzknoten (SGSN1) umfasst:
eine erste Routine zum Prüfen der Partnerinformation betreffend Netzwerke, die vordefinierte Partnernetze des Netzwerks sind, wobei das Partnernetz und das Heimatnetz den Versorgungsnetzknoten gemeinsam benutzen; und
eine zweite Routine zum Auswählen eines Gateway Netzknotens auf Basis der Partnerinformation,
**dadurch gekennzeichnet, dass** der Versorgungsnetzknoten (SGSN1) arrangiert ist,
auf Basis der Partnerinformation zu prüfen, ob sich eine Mobilstation (MS) im Heimatnetz, in einem vordefinierten Partnernetz des Heimatnetzes oder in einem außerhalb derselben liegenden Netzwerk befindet;
den Gateway Netzknoten (GGSN1) des Heimatnetzes auszuwählen, wenn sich die Mobilstation (MS) in ihrem Heimatnetz befindet;
den Gateway Netzknoten (GGSN2) des Heimatnetzes auszuwählen, wenn sich die Mobilstation (MS) in einem vordefinierten Partnernetz des Heimatnetzes befindet; und den Gateway Netzknoten (GGSN1) des besuchten Netzwerks auszuwählen, wenn sich die Mobilstation (MS) außerhalb ihres Heimatnetzes oder außerhalb der vordefinierten mobilen Partnernetze ihres Heimatnetzes befindet.

16. Netzknoten nach Anspruch 15, **dadurch gekennzeichnet, dass** er ferner eine dritte Routine zum Pflegen der Partnerinformation aufweist.

17. Netzknoten nach Anspruch 15 oder 16, **dadurch gekennzeichnet, dass** er der SGSN eines GPRS Netzwerks ist.

## Revendications

1. Procédé pour sélectionner un noeud de réseau passerelle pour une station mobile (MS1, MS2) desservie par un noeud de réseau de service (SGSN1), dans un système où au moins deux opérateurs de réseau peuvent partager un réseau radio (UTRAN1) et le noeud de réseau de service (SGSN1), le système comprenant au moins deux noeuds de réseau passerelle (GGSN1, GGSN2), le procédé comprenant :
le maintien d'informations de partenaires concernant des réseaux partenaires prédéfinis (PLMN1, PLMN2), les informations de partenaires indiquant que lesdits opérateurs de réseau partagent le noeud de réseau de service (SGSN1) ; et
la sélection d'un noeud de réseau passerelle (GGSN1, GGSN2) pour la station mobile sur la base des informations de partenaires,
**caractérisé en ce que** l'étape de sélection du procédé comprend les étapes suivantes :
le contrôle sur la base des informations de partenaires du fait qu'une station mobile (MS) est dans le réseau de rattachement, dans un réseau partenaire prédéfini du réseau de rattachement ou dans un réseau à l'extérieur de ceux-ci ; et
la sélection du noeud de réseau passerelle (GGSN1) du réseau de rattachement si la station mobile (MS) est dans son réseau de rattachement ;
la sélection du noeud de réseau passerelle (GGSN2) du réseau de rattachement si la station mobile (MS) est dans un réseau partenaire prédéfini du réseau de rattachement ; ou
la sélection du noeud de réseau passerelle (GGSN1) d'un réseau visité si la station mobile (MS) est à l'extérieur de son réseau de rattachement ou de réseaux mobiles partenaires prédéfinis de son réseau de rattachement.

2. Procédé selon la revendication 1, **caractérisé en ce que** les informations de partenaires comprennent des indications directes ou indirectes du réseau dans lequel la station mobile est située (MS 1, MS2) ; et du réseau de rattachement de la station mobile (MS 1, MS2).

3. Procédé selon la revendication 1 ou 2, **caractérisé en ce que** l'étape de sélection du procédé comprend les étapes suivantes :
le contrôle sur la base des informations de partenaire du fait qu'une station mobile est dans un réseau qui est un réseau partenaire prédéfini de celui appartenant à son opérateur de réseau de rattachement ; et
la sélection du noeud de réseau passerelle (GGSN1) d'un réseau visité si la station mobile (MS) est dans un réseau qui est un réseau partenaire prédéfini de celui appartenant à son opérateur de réseau de rattachement.

4. Système de communication mobile comprenant :
au moins une station mobile (MS 1, MS2) ;
un registre d'abonné (HLR1, HLR2) pour maintenir des informations d'abonné de la station mobile (MS1, MS2) ;
au moins deux réseaux (PLMN1, PLMN2) auxquels la station mobile (MS1, MS2) peut se connecter quand elle se trouve dans la zone du réseau, un des réseaux étant le réseau de rattachement de la station mobile, les réseaux comprenant au moins un noeud de réseau passerelle (GGSN1, GGSN2) pour l'interaction entre des réseaux mobiles à commutation par paquets et des réseaux de transmission de données externes ; et
au moins un noeud de réseau de service (SGSN1) pour desservir la station mobile (MS 1, MS2) lorsque la station mobile se trouve dans la zone du noeud de réseau de service,
dans lequel le système est configuré pour
maintenir des d'informations de partenaires concernant des réseaux qui sont des réseaux partenaires prédéfinis du réseau de rattachement, le réseau de rattachement partageant au moins un noeud de réseau de service (SGSN1) avec chacun des réseaux partenaires prédéfinis ; et pour
sélectionner le noeud de réseau passerelle (GGSN1, GGSN2) en utilisant les informations de partenaires,
**caractérisé en ce que** le système est configuré en outre pour
contrôler sur la base des informations de partenaires si une station mobile (MS) est dans le réseau de rattachement, dans un réseau partenaire prédéfini du réseau de rattachement ou dans un réseau à l'extérieur de ceux-ci ;
sélectionner le noeud de réseau passerelle (GGSN1) du réseau de rattachement si la station mobile (MS) est dans son réseau de rattachement ;
sélectionner le noeud de réseau passerelle (GGSN2) du réseau de rattachement si la station mobile (MS) est dans un réseau partenaire prédéfini du réseau de rattachement ; et
sélectionner le noeud de réseau passerelle (GGSN1) d'un réseau visité si la station mobile (MS) est à l'extérieur de son réseau de rattachement ou de réseaux mobiles partenaires prédéfinis de son réseau de rattachement.

5. Système selon la revendication 4, **caractérisé en ce que** les informations de partenaires sont maintenues dans le noeud de réseau de service (SGSN1) pour indiquer les réseaux partageant le noeud de réseau de service (SGSN1).

6. Système selon la revendication 5, **caractérisé en ce que** le noeud de réseau de service (SGSN1) est configuré pour comparer le code MNC/MCC de la station mobile (MS), en relation avec l'activation de contexte de la station mobile, avec des identificateurs d'opérateur APN stockés pour chaque opérateur de réseau partageant le SGSN1, ledit code MNC/MCC indiquant explicitement le réseau de rattachement de la station mobile et ledit identificateur d'opérateur APN indiquant implicitement les informations de partenaires.

7. Système selon l'une quelconque des revendications 4, 5 ou 6, **caractérisé en ce que** le noeud de réseau de service (SGSN1) est également configuré pour connecter une station mobile (MS) située dans un réseau mobile qui est un réseau partenaire prédéfini de son réseau de rattachement à un noeud de réseau passerelle (GGSN2) du réseau de rattachement.

8. Système selon la revendication 4, **caractérisé en ce que** les informations de partenaires sont maintenues dans un registre d'abonné (HLR1, HLR2).

9. Système selon la revendication 8, **caractérisé en ce que** le registre d'abonné (HLR) est configuré pour
contrôler les informations de partenaires en relation avec l'actualisation de position de la station mobile (MS) ;
fixer la valeur d'un indicateur « Adresse visiteur-PLMN autorisée » à « Non » si la station mobile (MS) est dans un réseau partenaire prédéfini du réseau de rattachement ; et
indiquer la valeur de l'indicateur au noeud de réseau de service (SGSN1).

10. Système selon l'une quelconque des revendications 4, 8 ou 9, **caractérisé en ce que** le noeud de réseau de service (SGSN1) est également configuré pour connecter la station mobile (MS) située dans un réseau partenaire prédéfini de son réseau de rattachement au noeud de réseau passerelle (GGSN2) du réseau de rattachement.

11. Système selon la revendication 4 ou 8, **caractérisé en ce que** le registre d'abonné (HLR) est configuré pour
contrôler les informations de partenaires en relation avec l'actualisation de position de la station mobile (MS), les informations de partenaires comprenant au moins un réseau appartenant à l'opérateur de réseau de rattachement ;
fixer la valeur de l'indicateur « Adresse visiteur-PLMN autorisée » à « Oui » si la station mobile (MS) est dans un réseau qui est un réseau partenaire prédéfini de celui appartenant à son opérateur de réseau de rattachement ; et
indiquer la valeur de l'indicateur au noeud de réseau de service (SGSN1).

12. Système selon l'une quelconque des revendications 4, 8 ou 11, **caractérisé en ce que** le noeud de réseau de service (SGSN1) est également configuré pour connecter la station mobile (MS) située dans un réseau partenaire prédéfini de celui appartenant à son opérateur de réseau de rattachement au noeud de réseau passerelle (GGSN1) du réseau visité sur la base des informations de partenaires, les informations de partenaires comprenant au moins un réseau appartenant à l'opérateur de réseau de rattachement.

13. Système selon la revendication 8, **caractérisé en ce que** le registre d'abonné (HLR1, HLR2) est configuré pour
comparer le code MNC/MCC de la station mobile avec des identificateurs d'opérateur APN stockés pour chaque opérateur de réseau partageant le réseau en relation avec l'actualisation de position de la station mobile (MS) ; et
indiquer le résultat de la comparaison au noeud de réseau de service (SGSN1).

14. Registre d'abonné (HLR1, HLR2) pour maintenir des informations d'abonné dans un système comprenant :
au moins une station mobile,
au moins deux réseaux auxquels la station mobile peut se connecter quand elle se trouve dans la zone du réseau, un des réseaux étant le réseau de rattachement de la station mobile, les réseaux comprenant au moins un noeud de réseau passerelle pour l'interaction entre des réseaux mobiles à commutation par paquets et des réseaux de transmission de données externes ; et
au moins un noeud de réseau de service pour desservir une station mobile lorsque la station mobile se trouve dans la zone du noeud de réseau de service,
le registre d'abonné (HLR1, HLR2) comprenant :
un premier sous-programme pour maintenir des informations de partenaires concernant des réseaux qui sont des réseaux partenaires prédéfinis, le réseau partenaire et le réseau de rattachement partageant au moins un noeud de réseau de service ;
un deuxième sous-programme pour contrôler les informations de partenaires de la station mobile ; et
un troisième sous-programme pour indiquer, sur la base des informations de partenaires, le noeud de réseau passerelle, auquel la station mobile est connectée, au noeud de réseau de service desservant la station mobile,
**caractérisé en ce que** le registre d'abonné (HLR1, HLR2) est agencé pour
contrôler sur la base des informations de partenaires si une station mobile (MS) est dans le réseau de rattachement, dans un réseau partenaire prédéfini du réseau de rattachement ou dans un réseau à l'extérieur de ceux-ci ;
indiquer le noeud de réseau passerelle (GGSN1) du réseau de rattachement si la station mobile (MS) est dans son réseau de rattachement ;
indiquer le noeud de réseau passerelle (GGSN2) du réseau de rattachement si la station mobile (MS) est dans un réseau partenaire prédéfini du réseau de rattachement ; et
indiquer le noeud de réseau passerelle (GGSN1) d'un réseau visité si la station mobile (MS) est à l'extérieur de son réseau de rattachement ou de réseaux mobiles partenaires prédéfinis de son réseau de rattachement.

15. Noeud de réseau de service (SGSN1) pour retransmettre des données commutées par paquets dans un système comprenant
au moins une station mobile ;
un registre d'abonné pour maintenir des informations d'abonné de la station mobile ; et
au moins deux réseaux auxquels la station mobile peut se connecter quand elle se trouve dans la zone du réseau, un des réseaux étant le réseau de rattachement de la station mobile, les réseaux comprenant au moins un noeud de réseau passerelle pour l'interaction entre des réseaux mobiles à commutation par paquets et des réseaux de transmission de données externes,
dans lequel le noeud de réseau de service (SGSN1) comprend :
un premier sous-programme pour contrôler des informations de partenaires concernant des réseaux qui sont des réseaux partenaires prédéfinis du réseau, le réseau partenaire et le réseau de rattachement partageant le noeud de passerelle de service ; et
un deuxième sous-programme pour sélectionner un noeud de réseau passerelle sur la base des informations de partenaires,
**caractérisé en ce que** le noeud de réseau de service (SGSN1) est agencé pour
contrôler sur la base des informations de partenaires si une station mobile (MS) est dans le réseau de rattachement, dans un réseau partenaire prédéfini du réseau de rattachement ou dans un réseau à l'extérieur de ceux-ci ;
sélectionner le noeud de réseau passerelle (GGSN1) du réseau de rattachement si la station mobile (MS) est dans son réseau de rattachement ;
sélectionner le noeud de réseau passerelle (GGSN2) du réseau de rattachement si la station mobile (MS) est dans un réseau partenaire prédéfini du réseau de rattachement ; et
sélectionner le noeud de réseau passerelle (GGSN1) d'un réseau visité si la station mobile (MS) est à l'extérieur de son réseau de rattachement ou de réseaux mobiles partenaires prédéfinis de son réseau de rattachement.

16. Noeud de réseau selon la revendication 15, **caractérisé en ce qu'**il comprend en outre un troisième sous-programme pour maintenir des informations de partenaires.

17. Noeud de réseau selon la revendication 15 ou 16, **caractérisé en ce qu'**il est le SGSN d'un réseau GPRS.
